(19) Europäisches Patentamt / European Patent Office / Office européen des brevets

(11) **EP 2 384 018 A1**

(12) **DEMANDE DE BREVET EUROPEEN**

(43) Date de publication:
**02.11.2011 Bulletin 2011/44**

(51) Int Cl.:
*H04Q 9/02* *(2006.01)*    *G08B 25/10* *(2006.01)*

(21) Numéro de dépôt: **10305469.8**

(22) Date de dépôt: **30.04.2010**

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**
Etats d'extension désignés:
**AL BA ME RS**

(71) Demandeur: **Gemalto SA**
**92190 Meudon (FR)**

(72) Inventeur: **Faure, Frédéric**
**13260, CASSIS (FR)**

(54) **Procédé de détection d'une condition anormale de fonctionnement environnementale d'un élément embarqué dans un appareil et élément correspondant**

(57) L'invention concerne notamment un procédé de détection d'une condition anormale de fonctionnement environnementale d'un élément 20 embarqué dans un appareil. L'élément 20 est apte à communiquer avec un réseau de télécommunications, le procédé consistant à :
- mesurer cycliquement au moins un paramètre de fonctionnement environnemental de l'élément 20 ;
- détecter que l'élément 20 fonctionne pendant une durée excessive dans au moins une plage de fonctionnement de référence ;
- transmettre un message d'alerte au réseau de télécommunications si l'élément 20 a fonctionné pendant une durée excessive dans la plage de fonctionnement de référence.

Fig-3

**Description**

Le domaine de l'invention est celui des télécommunications. Plus précisément, la présente invention concerne notamment un procédé de détection d'une condition de fonctionnement environnementale anormale d'un élément embarqué dans un appareil, cet élément étant apte à communiquer avec un réseau de télécommunications.

L'invention trouve une application toute particulière dans le domaine des communications entre machines (M2M).

Ces machines, au sens large du terme, sont typiquement des équipements, des appareils, des véhicules, des emballages, des objets quotidiens, des espaces publics, mais aussi des arbres, des zones inondables, des forêts, des animaux domestiques ou sauvages. A titre d'exemple, un fabricant d'instruments pour la production de pétrole et de gaz, utilise le M2M pour permettre à ses clients de recueillir à distance des données sur les débits, les pressions, températures, niveaux de réservoir et de l'équipement. Un fabricant de pompes à injection pour puits utilise le M2M pour donner à ses clients un moyen d'ajuster le fonctionnement de la pompe à distance (en fonction des conditions météorologiques). On évite ainsi l'ajustement sur le site.

De manière connue, un élément de sécurité tel qu'une carte SIM, USIM, ISIM ou URIM peut être utilisé pour assurer des communications entre machines. Ces cartes Sims sont reliées à des éléments de téléphones portables pour pouvoir communiquer par ondes hertziennes avec des équipements distants d'un réseau de télécommunications.

Une carte de ce type peut avoir le format d'un plug-in classique (format ID-00), se présenter sous la forme d'un plug-in renforcé (par exemple en ABS, en PET ou en résine) ou alors sous la forme d'un circuit intégré destiné à être soudé sur un circuit imprimé ou à être inséré dans un lecteur adapté.

La carte ou le circuit intégré renferme une puce telecom classique, tel que celles utilisées dans les terminaux GSM, UMTS, HSPA, LTE ou CDMA, ou alors une puce dédiée spécifiquement au M2M.

Un fabricant de cartes SIM ou de circuits intégrés destinés au M2M, ci-après appelés éléments, garantit à son client le fonctionnement de ces éléments dans des conditions environnementales précises. Un élément M2M est en effet soumis à des conditions de fonctionnement qui peuvent être rigoureuses et qui limitent sa durée de vie. A titre d'exemple, le nombre de cycles d'effacement/écriture d'un de ses registres est garanti dans une certaine plage de température de fonctionnement. De nombreux cycles d'effacement/écriture fatiguent la puce, de même que des fonctionnements à des températures extrêmes. Lorsque ces puces sont embarquées par exemple dans des véhicules, elles sont de plus soumises à des vibrations et à des accélérations qui diminuent leurs durées de fonctionnement (les vibrations peuvent mener à de mauvais contacts lorsqu'il s'agit de cartes enfichables - et donc non soudées - et les accélérations sont généralement dues à des chocs).

De même, un taux d'humidité excessif peut endommager les cartes du fait d'apparition de rouille sur leurs contacts ou sur les connecteurs du lecteur associé.

Afin d'augmenter la durée de vie de la carte, les fabricants d'éléments développent des systèmes d'exploitation spécifiques qui répartissent l'usure de la mémoire sur la totalité ou presque de la mémoire. Pour parer aux vibrations, accélérations et à l'humidité, c'est-à-dire aux conditions environnementales, le choix d'un facteur de forme adapté est primordial (intégration de la puce dans un boîtier spécifique par exemple ou alors intégration de cette puce dans un circuit intégré qui peut être soudé).

L'inconvénient des systèmes M2M actuels est que lorsqu'une puce n'a pas atteint la durée de vie garantie par son fabricant, il est difficile d'identifier la raison de sa défaillance précoce. Pour le fabricant de la puce ou de l'élément, il est notamment souhaitable de pouvoir moduler les conditions de garantie qu'il donne à son client en fonction de l'utilisation de l'élément comprenant la puce.

Ainsi, il est nécessaire de faciliter l'analyse des conditions de l'environnement dans lequel une puce est utilisée.

La présente invention a notamment pour objectif d'apporter une telle solution.

A cet effet, la présente invention propose un procédé de détection d'une condition anormale de fonctionnement environnementale d'un élément embarqué dans un appareil, cet élément étant apte à communiquer avec un réseau de télécommunications, le procédé consistant à :

-    mesurer cycliquement au moins un paramètre de fonctionnement environnemental de cet élément ;
-    détecter que l'élément fonctionne pendant une durée excessive dans au moins une plage de fonctionnement de référence ;
-    transmettre un message d'alerte au réseau de télécommunications si l'élément a fonctionné pendant une durée excessive dans la plage de fonctionnement de référence.

Dans un mode de mise en oeuvre préférentiel de l'invention, la transmission du message d'alerte est réalisée automatiquement par l'élément.

Dans un autre mode de mise en oeuvre éventuellement complémentaire, la transmission du message d'alerte est réalisée sur requête du réseau.

L'élément est préférentiellement un élément de sécurité du réseau de télécommunications tel qu'une carte Sim ou analogue.

Dans un mode de mise en oeuvre avantageux, l'élément est connecté à un capteur environnemental.

Dans un autre mode de mise en oeuvre, l'élément intègre un capteur environnemental.

Le capteur environnemental peut être un capteur de température, de pression, d'accélération ou d'hygrométrie.

Le procédé de l'invention est avantageusement mis en oeuvre dans un environnement M2M.

La plage de fonctionnement de référence et/ou la durée à partir de laquelle il est considéré que l'élément fonctionne pendant une durée excessive sont préférentiellement mis à jour via OTA dans l'élément. L'élément déclencheur peut être une mise à jour des règles par un opérateur ou bien via une alerte issue de la carte (par exemple lorsqu'on a atteint le nombre max de cycles).

L'invention concerne également un élément de détection d'une condition anormale de fonctionnement environnementale de cet élément, l'élément étant embarqué dans un appareil et apte à communiquer avec un réseau de télécommunications, cet élément comprenant :

-   des moyens de mesure cyclique d'au moins un paramètre de fonctionnement environnemental de l'élément ;
-   des moyens de détection que l'élément fonctionne pendant une durée excessive dans au moins une plage de fonctionnement de référence ;
-   des moyens de transmission d'un message d'alerte au réseau de télécommunications, les moyens de transmission étant activés si l'élément a fonctionné pendant une durée excessive dans cette plage de fonctionnement de référence.

D'autres caractéristiques et avantages de l'invention apparaîtront à la lecture de la description suivante d'un mode de mise en oeuvre préférentiel, donné à titre illustratif et non limitatif, et des dessins annexés, dans lesquels :

-   la figure 1 représente schématiquement le fonctionnement du procédé selon l'invention ;
-   la figure 2 représente un tableau tel que construit par l'élément selon l'invention ;
-   la figure 3 montre un élément conforme à la présente invention.

L'invention propose de suivre l'évolution d'une condition de fonctionnement environnementale d'un élément de type M2M. A cet effet, la présente invention propose d'associer à cet élément au moins un capteur, par exemple de température, de pression, d'accélération ou encore d'hygrométrie, chargé d'effectuer des mesures environnementales qui sont ensuite stockées dans cet élément. Le capteur peut être intégré dans l'élément ou alors être raccordé à celui-ci et communiquer avec l'élément selon par exemple les standards SWP ou GPIO.

Le principe de l'invention est de détecter une condition anormale de fonctionnement environnementale d'un élément embarqué dans un appareil, cet élément étant apte à communiquer avec un réseau de télécommunications, tel qu'un réseau Internet ou GSM par exemple. Le procédé selon l'invention consiste à :

   i - mesurer cycliquement au moins un paramètre de fonctionnement environnemental de cet élément, ce paramètre étant par exemple une température, une pression ou un degré d'hygrométrie ;
   ii - détecter que l'élément fonctionne pendant une durée excessive dans au moins une plage de fonctionnement de référence ;
   iii - transmettre un message d'alerte au réseau de télécommunications si l'élément a fonctionné pendant une durée excessive dans la plage de fonctionnement de référence.

La plage de fonctionnement de référence est déterminée par exemple par l'opérateur du réseau de télécommunications ou par le fabricant de l'élément. Cette plage est typiquement une plage à surveiller particulièrement.

A titre d'exemple, les fabricants garantissent que leurs éléments M2M fonctionneront pendant une durée de 8 ans pour 5 millions de cycles sur le fichier $EF_{loci}$ (« Location information » en anglais, un fichier contenant notamment le TMSI et le LAI de l'élément), pour un taux d'humidité inférieur à 80%, une accélération inférieure à 40G, et pour un certain profil de température de fonctionnement. Un tel profil de température du fabriquant est donné à titre d'exemple dans le tableau 1 suivant.

Tableau 1

| Gamme de température | Condition temporelle |
|---|---|
| -50°C / 0°C | ≤ 20% |
| 0°C / 50°C | ≤ 100% |
| 50°C / 120°C | ≤ 20% |

(suite)

| Gamme de température | Condition temporelle |
|---|---|
| 80°C / 120°C | ≤ 10% |

Ce tableau montre que l'élément M2M concerné est garanti par son fabriquant si les conditions suivantes sont respectées :

- l'élément doit fonctionner au maximum 20% du temps entre une température comprise entre -50°C et 0°C ;
- l'élément fonctionne idéalement entre 0°C et 50°C ;
- l'élément doit fonctionner au maximum 20% du temps entre une température comprise entre 50°C et 120°C ;
- l'élément doit fonctionner au maximum 10% du temps entre une température comprise entre 80°C et 120°C.

Les plages à surveiller particulièrement sont donc -50°C à 0°C, 50°C à 120°C et 80°C à 120°C.

Lorsque l'élément détecte qu'il fonctionne pendant une durée excessive dans au moins une de ces plages de fonctionnement de référence, il en avertit le réseau de télécommunications. Le gestionnaire du réseau peut alors intervenir sur site pour vérifier le fonctionnement de l'appareil dans lequel l'élément est embarqué ou prévenir d'une manière ou d'une autre (remplacement de l'élément par exemple) une panne de l'élément M2M. On permet ainsi de détecter à distance une future panne probable de l'élément M2M et/ou de l'appareil dans lequel il est installé.

Le fait que l'élément fonctionne dans la plage 0-50°C n'est pas un critère intéressant dans le cadre de la présente invention puisque l'élément est justement conçu pour y fonctionner pendant 100% du temps.

Ces remarques sont bien entendu également applicables pour des mesures de pression, d'accélération ou d'humidité excessives.

L'invention revient donc à vérifier que l'élément M2M embarqué dans un appareil fonctionne dans des conditions environnementales attendues. On peut comparer cette vérification au respect d'un gabarit environnemental prévu par le fabricant de cet élément.

La transmission du message d'alerte au réseau peut être réalisée automatiquement par l'élément, une fois que celui-ci détecte qu'il a fonctionné dans au moins une plage de fonctionnement pendant une durée supérieure à celle prévue. Ceci est particulièrement intéressant si l'élément détecte qu'il a fonctionné, même ne serait-ce que quelques instants, hors des plages mentionnées précédemment, en-deca de -50°C ou au-delà de 120°C.

Dans un autre mode de mise en oeuvre éventuellement complémentaire, la transmission du message d'alerte au réseau est réalisée sur requête de ce réseau. Le réseau interroge alors l'élément, par exemple régulièrement, pour vérifier qu'il n'a pas de message d'alerte à transmettre.

L'élément est préférentiellement un élément de sécurité du réseau de télécommunications tel qu'une carte Sim ou analogue (USIM, URIM,...). On entend par élément de sécurité un élément assurant des fonctions sécurisées dans le réseau, tel que du chiffrement, déchiffrement, de l'authentification, etc.

L'élément est, dans un premier mode de mise en oeuvre, connecté à un capteur environnemental, tel qu'un simple capteur de température. Dans un autre mode de mise en oeuvre, l'élément intègre lui-même un capteur environnemental. A titre d'exemple, il a été proposé par le demandeur d'intégrer un capteur de température dans une carte Sim.

La description suivante correspond à un mode de mise en oeuvre spécifique de l'invention.

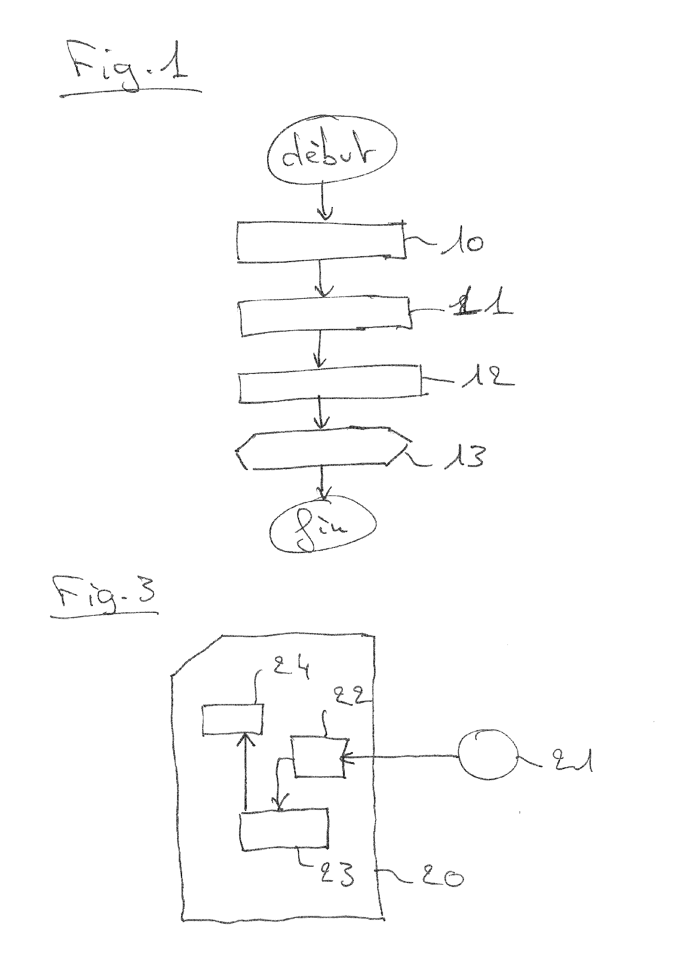

Comme montré à la figure 1, le procédé selon l'invention comprend quatre phases principales :

- une première phase 10 de récupération (relevé) de plusieurs mesures successives effectuées par le capteur ;
- une deuxième phase 11 de collecte des différentes mesures ;
- une troisième phase 12 de comparaison des mesures collectées avec un gabarit de fonctionnement de référence comprenant des plages de fonctionnement de référence de l'élément en fonction du temps ;
- une quatrième possible phase 13 d'alerte consistant à prévenir le réseau de télécommunications avec lequel l'élément est apte à communiquer si cet élément a fonctionné pendant une durée excessive dans une des plages de fonctionnement de référence.

On se mettra dans le cadre de la description suivante dans la situation où un élément M2M est associé à un capteur de température.

La phase 10 de récupération des mesures consiste à récupérer la température prélevée par le capteur de température et également le temps séparant cette mesure de la mesure précédente.

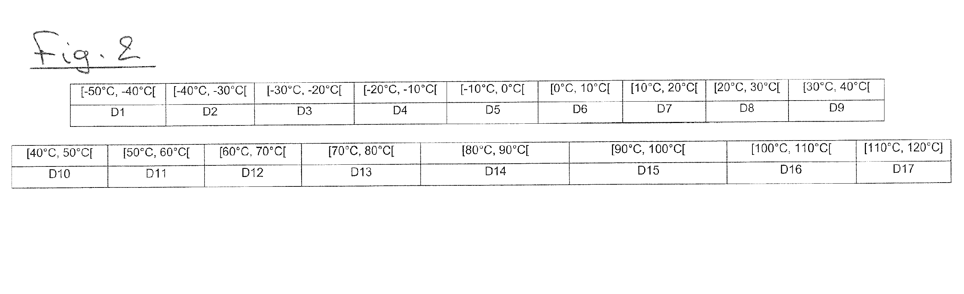

L'élément de sécurité va ainsi récupérer plusieurs températures successives ainsi que les durées correspondantes. A titre descriptif, à un instant $t_0$, l'élément de sécurité va mesurer une température $T_0$. A un instant $t_1 = t_{0+\Delta t}$,

l'élément de sécurité va mesurer une température T1. On considèrera que l'élément de sécurité a fonctionné à la température T1 pendant la durée $\Delta t$ qui est la durée séparant deux mesures successives. Cette durée peut être fixe (périodique) ou non. A l'instant de mesure suivant $t_2$, l'élément de sécurité va mesurer une température T2. On considèrera que l'élément de sécurité a fonctionné à la température T2 pendant la durée $t_2 - t_1$. On procède ainsi de suite tout en alternant avec la phase de collecte des mesures qui consiste à construire un tableau tel que celui représenté à la figure 2.

Ce tableau (en deux parties pour des raisons de commodité de représentation graphique) représente la durée cumulée de fonctionnement de l'élément dans les différentes plages de température. Ces durées sont notées D1 à D17. En général, les fabricants d'éléments M2M garantissent que leurs éléments pourront fonctionner pendant une durée donnée dans un environnement précis.

Le tableau de la figure 2 montre justement comment un tel profil de température peut être comparé. On a ici constitué des plages de température de 10°C, régulièrement réparties entre -50°C et +120°C. On dispose donc de 17 plages de température. A chaque relevé de température durant la première phase de récupération, on regarde la température relevée pour déterminer la plage dans laquelle elle est comprise. Ensuite, on additionne dans la seconde ligne la durée séparant ce relevé de température du relevé précédent à la durée figurant déjà dans cette plage. On obtient ainsi et au fur et à mesure des relevés de température, un tableau montrant depuis la mise en fonction de l'élément, la durée D1 à D17 de son fonctionnement dans chaque plage de température.

Le fait d'avoir un nombre important de plages de température dans le tableau permet d'avoir une granularité importante, ici de 10°C. Il est possible de l'augmenter ou de la diminuer en fonction des besoins. A titre d'exemple de simplification, si les critères à prendre en compte sont ceux du tableau 1, quatre plages de relevés sont suffisantes : [-50°C ; 0°C[, [0°C ; 50°C[, [50°C ; 80°C[ et [80°C ; 120°C[. Ceci est détaillé ci-dessous.

La troisième phase du procédé selon l'invention consiste à comparer les mesures collectées avec le gabarit de fonctionnement de référence comprenant des plages de fonctionnement de référence de l'élément en fonction du temps. A ce titre, il est vérifié, par exemple au fur et à mesure du remplissage du tableau de la figure 2, si les mesures collectées respectent les règles fixées par le gabarit de référence. En reprenant l'exemple précédent, on peut ainsi définir une règle simple consistant à considérer que l'élément fonctionne dans les plages prédéfinies du tableau 1 si : La durée de fonctionnement de l'élément dans la plage [-50°C ; 0°C[ est égale à D20=D1+D2+D3+D4+D5, celle dans la plage [0°C ; 50°C[ est égale à D30=D6+D7+D8+D9+D10, celle dans la plage [50°C; 80°C[ est égale à D40=D11+D12+D13 et celle dans la plage [80°C ; 120°C[ égale à D50=D14+D15+D16+D17.

La durée totale D de fonctionnement est égale à D1+D2+...+D17. On peut alors simplement déterminer le pourcentage de temps de fonctionnement de l'élément dans chacune des plages. Ceci est représenté dans le tableau 2 ci-dessous :

Tableau 2

| Gamme de température | Condition temporelle | Vérification |
|---|---|---|
| -50°C / 0°C | $\leq 20\%$ | D20/D <>0,2 ? |
| 0°C / 50°C | $\leq 100\%$ | D30/D <> 1 ? |
| 50°C / 120°C | $\leq 20\%$ | D40/D <> 0,2 ? |
| 80°C / 120°C | $\leq 10\%$ | D50/D <> 0,1 ? |

La troisième colonne du tableau 2 intitulée « Vérification » est un test permettant de détecter un fonctionnement de l'élément en-dehors du gabarit de fonctionnement de référence. Dans un mode de mise en oeuvre simplifié, si l'élément détecte qu'il n'a pas fonctionné normalement dans une des plages garanties par son fabricant, c'est-à-dire qu'il a fonctionné trop longtemps dans une des plages de référence par rapport à la durée prévue, il envoie un message d'alerte au réseau de télécommunications.

Ceci correspond à la quatrième phase 13 du procédé selon l'invention consistant à prévenir le réseau de télécommunications avec lequel l'élément est apte à communiquer si cet élément a fonctionné pendant une durée excessive dans une des plages de fonctionnement de référence.

Sur requête du réseau, il est également possible de relever les valeurs des durées de fonctionnement dans les différentes plages.

Dans un autre mode de mise en oeuvre, une plage de fonctionnement de référence est constituée par plusieurs plages unitaires. Par exemple, le message d'alerte est envoyé au réseau si les conditions suivantes sont respectées :

$$D1+D2 > 3\% \text{ ET } D15+D16+D17>5\%$$

$$\underline{OU}$$

$$D1+D2 +D3>5\% \text{ ET } D17>1\%$$

(les fonctions logiques étant soulignées)
Ceci correspond aux critères suivants :

- fonctionnement en-deca de -30°C pendant plus de 3% du temps ET fonctionnement à plus de 90°C plus de 5% du temps,
- OU fonctionnement en deca de 20°C pendant plus de 5% du temps ET fonctionnement à plus de 110°C pendant plus de 1 % du temps.

Les critères d'envoi d'un message d'alerte peuvent être aisément mis à jour via OTA ainsi que les plages de fonctionnement de référence. L'invention se présente avantageusement sous la forme d'un simple logiciel fonctionnant au niveau de l'élément, celui-ci comprenant la puce à surveiller. Il est préférablement installé, lors d'une personnalisation d'une carte Sim, dans la puce de cette carte.

Comme précédemment indiqué, la fréquence des mesures est de préférence fixe, pour des raisons de simplicité. Une horloge régulière indique les instants où les mesures doivent être prises. Cette horloge peut être soit intégrée à l'élément, soit dans un terminal mobile auquel est connecté l'élément. Dans ce dernier cas, une mesure de température peut avoir lieu à chaque occurrence d'une commande « Status » par exemple, suivant laquelle le terminal mobile demande régulièrement à l'élément dans quel état il se trouve.

Il est également possible d'envisager que ce n'est pas l'élément qui décide de lui-même d'envoyer un message d'alerte au réseau, mais que ce soit le réseau qui interroge de temps en temps l'élément pour lui demander s'il a une anomalie à reporter. Si ce cas est avéré, l'élément en informe le réseau.

Le message envoyé au réseau comprend préférentiellement les températures relevées dans les différentes plages de température. Il est cependant parfois suffisant de ne s'intéresser qu'à la plage dans laquelle l'élément a fonctionné au-dessus du seuil garanti par le fabriquant.

L'invention concerne également un élément de détection d'une condition anormale de fonctionnement environnementale de cet élément. Un tel élément 20 est représenté à la figure 3.

L'élément 20 est ici représenté sous la forme d'une carte Sim. Cette carte 20 renferme une puce dont on veut pouvoir surveiller le fonctionnement à distance. La carte 20 est donc non seulement comprise dans un appareil à surveiller ou à commander, mais est également apte à communiquer avec un réseau de télécommunications. Elle est pour cela raccordée à l'aide de ses contacts à un terminal mobile comprenant des moyens de télécommunications classiques (modulateur, démodulateur, antenne,...).

Selon l'invention, l'élément 20 comprend des moyens 22 de mesure cyclique d'au moins un paramètre de fonctionnement environnemental de l'élément 20. Ces moyens 22 sont ici raccordés à un capteur extérieur 21, par exemple un capteur de température.

Les moyens de mesure 22 fournissent les relevés de mesure à des moyens 23 de détection. Ces derniers sont chargés de vérifier si l'élément 20 ne fonctionne pas pendant une durée excessive dans une plage de fonctionnement de référence. En cas de détection que l'élément 20 fonctionne pendant une durée excessive dans une plage de fonctionnement de référence, les moyens de détection 23 activent des moyens 24 de transmission d'un message d'alerte au réseau de télécommunications. L'activation de ces moyens 24 de transmission a pour conséquence la transmission d'une alerte au réseau.

Les moyens de détection 23 peuvent être mis à jour via OTA, par exemple afin de définir de nouvelles plages de fonctionnement de référence ou pour modifier la fréquence des relevés par les moyens 22.

L'élément selon l'invention et qui comprend la puce dont on veut surveiller le fonctionnement peut être soudé à l'appareil M2M et demeure donc un élément résidant dans le dispositif M2M à laquelle la puce est associée. La puce peut également être comprise dans une carte, amovible ou non et comprendre une application par exemple de type Subscriber Identity Module (ou SIM) qui permet d'authentifier un « abonné » associé à la carte SIM par rapport à un réseau de communications, comme, notamment, un réseau de radiocommunications mobile.

L'invention permet d'analyser si les conditions de garantie sont ou non satisfaites en comptant une durée, durant la période de garantie de la puce, pour une plage de valeurs d'un ou de plusieurs paramètres (température, pression, hygrométrie, accélération, pollution extérieure,...).

Il est à noter que la puce selon l'invention s'applique quel que soit l'emballage de la puce, la puce nue ou incorporée dans un corps d'une carte, un dongle et / ou tout autre moyen de, et que la puce fonctionne seule ou en collaboration avec un autre périphérique, comme un terminal ou un terminal utilisateur. Ainsi, la puce est un élément autonome ou est hébergée par un support électronique qui peut avoir des facteurs de forme différents.

Par exemple, la puce peut être réalisée dans une carte à puce, une carte Secure Digital (SD ou) de la carte, un type Multi-Media Card (ou MMC), un dongle USB à puce de l'acronyme pour « Universal Serial Bus ».

Le procédé de l'invention peut être mis en oeuvre par une puce, comme une entité autonome, ou par une puce qui peut être intégrée au sein d'un terminal d'un utilisateur. Le terminal de l'utilisateur peut être un téléphone portable, un boitier ou un module M2M, un téléphone intelligent, un assistant numérique personnel (ou PDA), un ordinateur personnel (ou PC), un ordinateur portable mobile, un ordinateur portable, un téléviseur, etc.

L'invention telle que décrite ci-dessus l'a été en référence aux dessins annexés et l'homme du métier imaginera aisément d'autres modes de mise en oeuvre sans pour autant sortir du cadre des revendications.

**Revendications**

1. Procédé de détection d'une condition anormale de fonctionnement environnementale d'un élément (20) embarqué dans un appareil, ledit élément (20) étant apte à communiquer avec un réseau de télécommunications, **caractérisé en ce qu'**il consiste à :

   - mesurer cycliquement au moins un paramètre de fonctionnement environnemental dudit élément (20) ;
   - détecter que ledit élément (20) fonctionne pendant une durée excessive dans au moins une plage de fonctionnement de référence ;
   - transmettre un message d'alerte audit réseau de télécommunications si ledit élément (20) a fonctionné pendant une durée excessive dans ladite au moins une plage de fonctionnement de référence.

2. Procédé selon la revendication 1, **caractérisé en ce que** la transmission dudit message d'alerte est réalisée automatiquement par ledit élément (20).

3. Procédé selon la revendication 1 ou 2, **caractérisé en ce que** la transmission dudit message d'alerte est réalisée sur requête dudit réseau.

4. Procédé selon l'une des revendications 1 à 3, **caractérisé en ce que** ledit élément (20) est un élément de sécurité dudit réseau de télécommunications.

5. Procédé selon l'une des revendications 1 à 4, **caractérisé en ce que** ledit élément (20) est une carte Sim ou analogue.

6. Procédé selon l'une des revendications 1 à 5, **caractérisé en ce que** ledit élément (20) est connecté à au moins un capteur environnemental (21).

7. Procédé selon l'une des revendications 1 à 6, **caractérisé en ce que** ledit élément (20) intègre au moins un capteur environnemental.

8. Procédé selon l'une des revendications 1 à 7, **caractérisé en ce que** ledit capteur environnemental est un capteur de température, de pression, d'accélération ou d'hygrométrie.

9. Procédé selon l'une des revendications 1 à 8, **caractérisé en ce qu'**il est mis en oeuvre dans un environnement M2M.

10. Procédé selon l'une des revendications 1 à 9, **caractérisé en ce que** ladite au moins une plage de fonctionnement de référence et/ou la durée à partir de laquelle il est considéré que ledit élément (20) fonctionne pendant une durée excessive sont mis à jour via OTA dans ledit élément.

11. Elément (20) de détection d'une condition anormale de fonctionnement environnementale dudit élément (20), ledit élément (20) étant embarqué dans un appareil et apte à communiquer avec un réseau de télécommunications, **caractérisé en ce qu'**il comprend :

   - des moyens (22) de mesure cyclique d'au moins un paramètre de fonctionnement environnemental dudit élément (20) ;
   - des moyens (23) de détection que ledit élément (20) fonctionne pendant une durée excessive dans au moins une plage de fonctionnement de référence ;
   - des moyens (24) de transmission d'un message d'alerte audit réseau de télécommunications, lesdits moyens (24) de transmission étant activés si ledit élément (20) a fonctionné pendant une durée excessive dans ladite au moins une plage de fonctionnement de référence.

12. Elément de détection selon la revendication 11, **caractérisé en ce qu'**il est constitué par une carte Sim (20) ou analogue.

Fig. 1

Fig. 3

Fig. 2

| [-50°C, -40°C[ | [-40°C, -30°C[ | [-30°C, -20°C[ | [-20°C, -10°C[ | [-10°C, 0°C[ | [0°C, 10°C[ | [10°C, 20°C[ | [20°C, 30°C[ | [30°C, 40°C[ |
|---|---|---|---|---|---|---|---|---|
| D1 | D2 | D3 | D4 | D5 | D6 | D7 | D8 | D9 |

| [40°C, 50°C[ | [50°C, 60°C[ | [60°C, 70°C[ | [70°C, 80°C[ | [80°C, 90°C[ | [90°C, 100°C[ | [100°C, 110°C[ | [110°C, 120°C] |
|---|---|---|---|---|---|---|---|
| D10 | D11 | D12 | D13 | D14 | D15 | D16 | D17 |

Europäisches
Patentamt

European
Patent Office

Office européen
des brevets

**RAPPORT DE RECHERCHE EUROPEENNE**

Numéro de la demande

EP 10 30 5469

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | WO 2010/037425 A1 (ERICSSON TELEFON AB L M [SE]; KRCO SRDJAN [IE]; LOFTUS DAVID [IE]) 8 avril 2010 (2010-04-08)<br>* page 1, ligne 19 - page 2, ligne 10 *<br>* page 3, ligne 18 - page 4, ligne 12 *<br>* page 4, ligne 31 - page 5, ligne 27 *<br>* page 6, ligne 19 - page 7, ligne 7 *<br>* page 8, ligne 15-19 *<br>* revendications 1-4, 10-11, 22 *<br>----- | 1-12 | INV.<br>H04Q9/02<br>G08B25/10 |
| Y | WO 2008/016339 A1 (ROCKWELL AUTOMATION TECH INC [US]; CARLE PATRICK F [US]; BIBELHAUSEN D) 7 février 2008 (2008-02-07)<br>* alinéa [0007] - alinéa [0009] *<br>* alinéa [0012] *<br>* alinéa [0022] *<br>* alinéa [0025] - alinéa [0027] *<br>* alinéa [0038] *<br>* alinéa [0044] - alinéa [0049]; revendication 1 *<br>----- | 1-12 | |
| A | US 2008/270076 A1 (BREED DAVID S [US]) 30 octobre 2008 (2008-10-30)<br>* alinéa [0014] *<br>* alinéa [0017] - alinéa [0024] *<br>* alinéa [0164] *<br>* alinéa [0170] *<br>* alinéa [0189] *<br>----- | 1-12 | **DOMAINES TECHNIQUES RECHERCHES (IPC)**<br>H04Q<br>G08B |
| A | US 2005/038579 A1 (LEWIS MICHAEL W [US]) 17 février 2005 (2005-02-17)<br>* alinéa [0016] - alinéa [0020] *<br>* alinéa [0058] - alinéa [0060]; revendications 13-14 *<br>----- | 1,11 | |

Le présent rapport a été établi pour toutes les revendications

| Lieu de la recherche | Date d'achèvement de la recherche | Examinateur |
|---|---|---|
| La Haye | 13 septembre 2010 | Barbelanne, Alain |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
......................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 10 30 5469

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

13-09-2010

| Document brevet cité au rapport de recherche | Date de publication | Membre(s) de la famille de brevet(s) | Date de publication |
|---|---|---|---|
| WO 2010037425 A1 | 08-04-2010 | AUCUN | |
| WO 2008016339 A1 | 07-02-2008 | EP 2067129 A1 | 10-06-2009 |
| US 2008270076 A1 | 30-10-2008 | AUCUN | |
| US 2005038579 A1 | 17-02-2005 | AU 2004266402 A1<br>CA 2532992 A1<br>US 2005179537 A1<br>WO 2005020124 A1<br>ZA 200601594 A | 03-03-2005<br>03-03-2005<br>18-08-2005<br>03-03-2005<br>25-04-2007 |

EPO FORM P0460

Pour tout renseignement concernant cette annexe : voir Journal Officiel de l'Office européen des brevets, No.12/82